# EUROPEAN PATENT APPLICATION

(11) **EP 4 789 920 A1**
(43) Date of publication of application: **12.08.2026**
(21) Application number: 26155739.1
(22) Date of filing: 02.02.2026
(51) Int. Cl.: B60Q 1/46, B60Q 1/52, F21S 43/14, F21S 43/239, F21S 43/249, F21S 43/20

(54) **EMERGENCY DIRECTIONAL SPOTLIGHT**

(30) Priority: 10.02.2025 ES 202530100
(71) Applicant: Federal Signal Vama, S.A.U., 08339 Vilassar de Dalt (Barcelona) (ES)
(72) Inventor: MUÑOZ, Juan José, 08339 Vilassar De Dalt (Barcelona) (ES)
(74) Representative: Ungria López, Javier

(57) **Abstract**

There is disclosed an emergency directional spotlight (1) for emergency vehicles, comprising: a base plate (2), a microcontroller (3), a driver (4), and a light guide comprising: two horizontally arranged sets of LED lights (6, 6') and two flat refractors (5, 5'). The spotlight further comprises: a horizontal intermediate set of LED lights (7, 8, 9), a vertical intermediate set of LED lights (10, 11), an intermediate set of semicylindrical collimators (17), and an intermediate set of cylindrical collimators (18, 19). The sets of LED lights of the light guide, the horizontal intermediate set of LED lights, and the vertical intermediate set of LED lights are configured to generate the emission of predetermined light sequences according to the regulations in force. The double light guide and the LEDs between the light guide lead to a device having a small size.

## Description

### OBJECT OF THE INVENTION

The present invention relates to an emergency directional spotlight for emergency vehicles.

The spotlight of the present invention synergistically combines a double light guide and different sets of LED lights between the light guide, allowing a device which has a small size and is suitable to be installed in vehicles of all types, but particularly suitable for vehicles having little surface area for the placement of emergency spotlights or light vehicles with less than four wheels such as motorbikes, electric bicycles, and the like.

The technical field is the field of emergency lighting devices for light vehicles with less than four wheels intended as an emergency vehicle.

### BACKGROUND OF THE INVENTION

The ECE R65 standard applies to emergency lights for vehicles. The International Standard R65 regulates the characteristics of the emitted light, i.e., the colours, day/night light intensity (class 1/class 2), horizontal and vertical distribution angles, among others. These requirements make it difficult to design a device capable of emitting emergency lights according to the mentioned standard and all in a device having a small size that can be included in small parts of a vehicle, or in a vehicle having small dimensions such as motorbikes and electric bicycles that are currently part of the emergency vehicles used by the police, civil defence, etc.

There is no known emergency device in the state of the art which, being of a small size, is capable of emitting all the signals of the R65 Standard with the possibility of including another type of lights required by national/regional/local legislations.

### DESCRIPTION OF THE INVENTION

The emergency directional spotlight of the present invention is designed to comply with category X, wide angle, of the ECE R65 Standard. It can comply with both Class 2 (daytime and night-time light conditions) and Class 1 (night-time light conditions) of said standard in blue, red, or amber colours.

Therefore, in a first aspect of the invention, there is disclosed a directional emergency spotlight for emergency vehicles. The spotlight of the present invention comprises:
- a base plate;
- a microcontroller on the base plate, where the microcontroller is configured to emit control signals;
- a light guide, which in turn comprises:
   o two sets of LED lights, each of which is supported on the base plate and arranged horizontally;
   o two flat refractors, each of which is located over a set of LED lights;
- at least one horizontal intermediate set of LED lights located on the base plate and between the two sets of LED lights of the light guide;
- at least one vertical intermediate set of LED lights located on the base plate and between the two sets of LED lights of the light guide and laterally with respect to the horizontal intermediate set of LED lights;
- at least one intermediate set of semicylindrical collimators, where each semicylindrical collimator is located over a LED of the horizontal intermediate set of LED lights;
- at least one intermediate set of cylindrical collimators, where each cylindrical collimator is located over a LED of the vertical intermediate set of LED lights;
- a driver connected with the microcontroller, and also connected with at least the sets of LED lights of the light guide, the horizontal intermediate set of LED lights, and the vertical intermediate set of LED lights; the driver is configured to activate/deactivate each LED according to the control signals received from the microcontroller.

At least the sets of LED lights of the light guide, the horizontal intermediate set of LED lights, and the vertical intermediate set of LED lights are configured to generate predetermined light patterns. These predetermined light patterns correspond to the patterns established in the R65 Standard and/or national, regional, and/or local standards applicable to emergency lights.

The emergency directional spotlight of the present invention may further comprise a second horizontal intermediate set of LED lights located on the base plate and between the two sets of LED lights of the light guide. A configuration of two horizontal sets of lights between the LEDs of the light guide is thus obtained.

The emergency directional spotlight of the present invention may further comprise a second vertical intermediate set of LED lights. A configuration of two vertical sets of lights between the LEDs of the light guide is thus obtained. The vertical intermediate sets of LED lights are located on one side of the horizontal intermediate sets of LED lights. Therefore, in this embodiment, two vertical intermediate sets of LED lights, over which the cylindrical collimators are arranged, are obtained.

The emergency directional spotlight of the present invention may further comprise a rear casing configured to support the base plate. The rear casing can also serve to fix the emergency directional spotlight of the present invention to the emergency vehicle.

The emergency directional spotlight of the present invention may further comprise a front lens through which the light emitted by the different sets of LED lights is projected. The front lens can be a transparent lens or a translucent lens. The front lens may have any colour. Optionally, the front lens may comprise a window aligned with any one of the vertical intermediate sets of LED lights.

The emergency directional spotlight of the present invention may further comprise a voltage converter connected with the microcontroller. The voltage converter is connectable with a powered external controller by means of electric cables and data cables. The components of the spotlight are powered by means of electric cables such that the voltage converter transforms the DC voltage (Vdc) coming from the external controller (usually 12 v) into the voltage needed by the components of the spotlight (usually 5 v). The voltage converter receives, from the external controller, signals which it transfers to the microcontroller, where the signals represent the predetermined light sequences to be emitted by the spotlight of the present invention. The external controller may be a device located in the emergency vehicle, but is not part of the present invention.

In an embodiment of the emergency directional spotlight of the present invention, the sets of LED lights of the light guide, the horizontal intermediate sets of LED lights, and the vertical intermediate sets of LED lights are configured to emit lights of any colour, and preferably blue, red, and amber lights.

In another embodiment of the emergency directional spotlight of the present invention, a vertical intermediate set of LED lights is configured to emit a high-intensity red light (greater than 50 cd), to generate a "stop light". A strong, focused "stop light" is thus generated. This strong focused light effect can be optimised if the front lens has a transparent window aligned with the vertical intermediate set of LED lights.

In another embodiment of the emergency directional spotlight of the present invention, with the activation of the two vertical intermediate sets of LED lights and of the two horizontal intermediate sets of LED lights along with their respective collimators, a class 2 (CL2) blue light with 600 cd intensity is emitted.

In another embodiment of the emergency directional spotlight of the present invention, the two sets of LED lights of the light guide are configured to emit a high-intensity red light. This together with the two flat reflectors generates a "stop light" with a uniform light effect.

In another embodiment of the emergency spotlight of the present invention, the two sets of LED lights of the light guide are configured to emit a light with uniform intensity that can be used as cruising light. This "cruising light" is a uniform light to give visibility to the vehicle. This light could be of any colour.

Finally, it should be noted that, as a result of the configuration of the LEDs, and particularly as a result of the existence of the two light guides located "North" and "South", and the "East" and "West" arrangement of the horizontal and vertical sets of LED lights, the spotlight of the present invention is designed to be able to be used on both the left and right sides of the emergency vehicle in which the emergency spotlight of the present invention can be installed.

### BRIEF DESCRIPTION OF THE FIGURES

Figures 1 and 2 show the external appearance of the emergency spotlight according to an embodiment of the present invention.
Figure 3 shows a block diagram of the electrical/electronic components of the emergency spotlight according to an embodiment of the present invention.
Figure 4 shows an embodiment of the base plate for the emergency spotlight according to an embodiment of the present invention.
Figures 5 and 6 show the internal components of the emergency spotlight according to an embodiment of the present invention.
Figures 7 and 8 show two embodiments of the front lens of the emergency spotlight of the present invention.

A list of the references used in the figures is provided below:
1. Emergency directional spotlight;
2. Base plate;
3. Microcontroller;
4. Driver;
5. Flat refractors (5, 5') of the light guide;
6. Sets of LED lights (6, 6') of the light guide;
7. Upper horizontal intermediate set of LED lights in a two-row configuration;
8. Horizontal intermediate set of LED lights in a one-row configuration;
9. Lower horizontal intermediate set of LED lights in a two-row configuration;
10. First vertical intermediate set of LED lights;
11. Second vertical intermediate set of LED lights;
12. Rear casing;
13. Front lens;
14. Window of the front lens;
15. DC/DC voltage converter;
16. Electric cables (16) and data cables (16') for connection with a powered external controller;
17. Semicylindrical collimator of 3 LEDs;
18. Vertical cylindrical collimator of 2 LEDs;
19. Vertical cylindrical collimator of 2 LEDs.

### DESCRIPTION OF A PREFERRED EMBODIMENT OF THE INVENTION

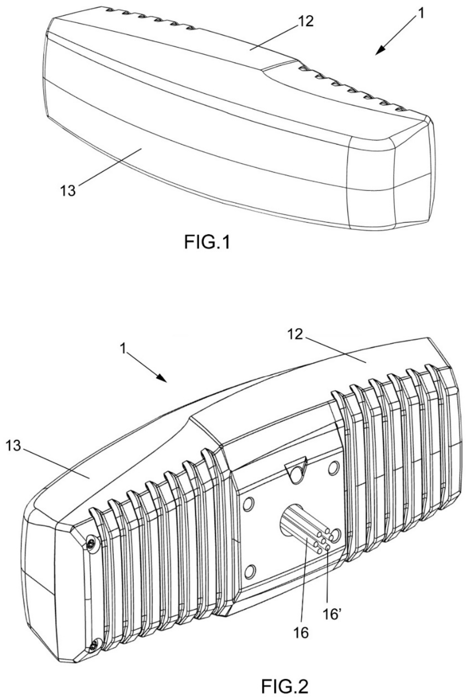

Figures 1 and 2 show the external appearance of the emergency directional spotlight according to an embodiment of the present invention. The rear casing 12, the front lens 13, and the electric cables and data cables 16, 16' for connection with a powered external controller (not shown) are distinguished externally in the emergency directional spotlight.

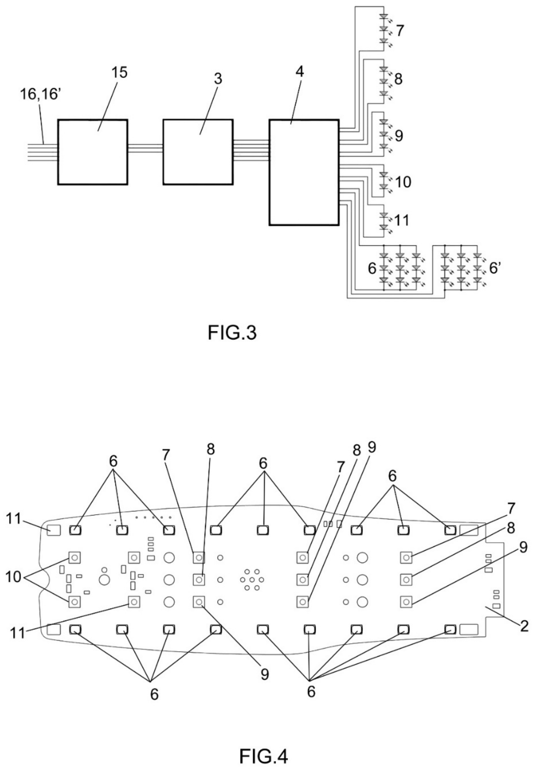

Figure 3 shows a block diagram of the electrical/electronic components of the emergency directional spotlight 1 according to an embodiment of the present invention. The block diagram shows the microcontroller 3 receiving power from the DC/DC voltage converter 15 and data commands by means of the data cables 16'. The DC/DC voltage converter 15 is powered by an external device (typically a battery included in the emergency vehicle) by means of the power cables 16. In turn, the microcontroller 3 is connected with the driver 4, which is configured to switch on the different sets of LED lights 6, 6', 7, 8, 9, 10, 11 comprised in the emergency directional spotlight 1. The driver 4 receives from the microcontroller 3 the different on/off instructions for the different sets of LED lights 6, 6', 7, 8, 9, 10, 11. The driver is powered by the microcontroller 4 or the DC/DC voltage converter 15.

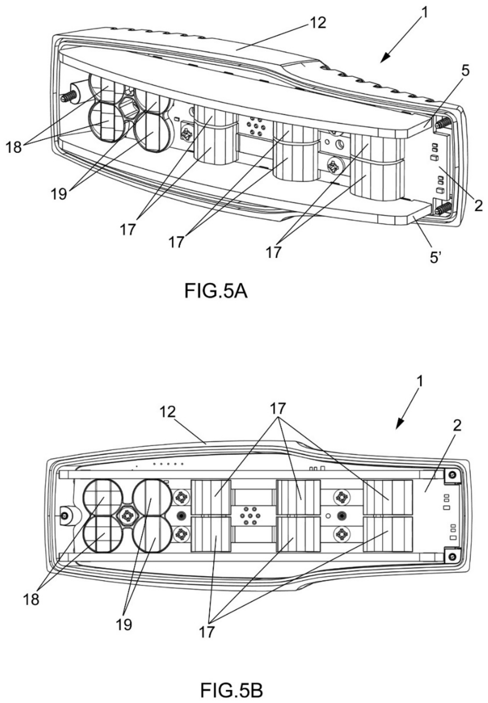

Figure 4 shows an embodiment of the base plate for the emergency directional spotlight according to an embodiment of the present invention. The two sets of LED lights 6 and 6' of the light guide can be seen in the base plate 2, each of which is formed by nine horizontally distributed LEDs. The flat refractors 5 and 5' are located aligned over each set of nine LEDs (see Figure 5). Horizontal intermediate sets of LED lights 7, 8, and 9 are located between the two sets of LED lights 6 and 6' of the light guide. Depending on the end use of the spotlight 1 of the present invention, a horizontal "two-row" or "one-row" configuration can be made. As an example of the one- and two-row configurations, the following table is shown:

| | Model | A (10) | B (11) | C (7) | D (8) | E (9) | F (6) | G (6') |
|---|---|---|---|---|---|---|---|---|
| "One-row" configuration | CL1, without light guide, without "stop" light | ON, R65 | ON, R65 | OFF | ON, R65 | OFF | OFF | OFF |
| | CL1, without light guide, with "stop" light | ON, R65 | ON, SL | OFF | ON, R65 | OFF | OFF | OFF |
| | CL1, with light guide, without "stop" light | ON, R65 | ON, R65 | OFF | ON, R65 | OFF | ON, light guide | ON, light guide |
| | CL1, with light guide, with "stop" light | ON, R65 | ON, SL | OFF | ON, R65 | OFF | ON, light guide | ON, light guide |
| "Two-row" configuration | CL2, without light guide, without "stop" light | ON, R65 | ON, R65 | ON, R65 | OFF | ON, R65 | OFF | OFF |
| | CL2, without light guide, with "stop" light | ON, R65 | ON, SL | ON, R65 | OFF | ON, R65 | OFF | OFF |
| | CL2, with light guide, without "stop" light | ON, R65 | ON, R65 | ON, R65 | OFF | ON, R65 | ON, light guide | ON, light guide |
| | CL2, with light guide, with "stop" light | ON, R65 | ON, SL | ON, R65 | OFF | ON, R65 | ON, light guide | ON, light guide |

| | | | | | | | | |
|---|---|---|---|---|---|---|---|---|
| SL = "stop light": powerful red light. R65 = any type of flashing light with colour (red, blue, amber) and intensity (class 1/class 2) under R65 Standard. | | | | | | | | |

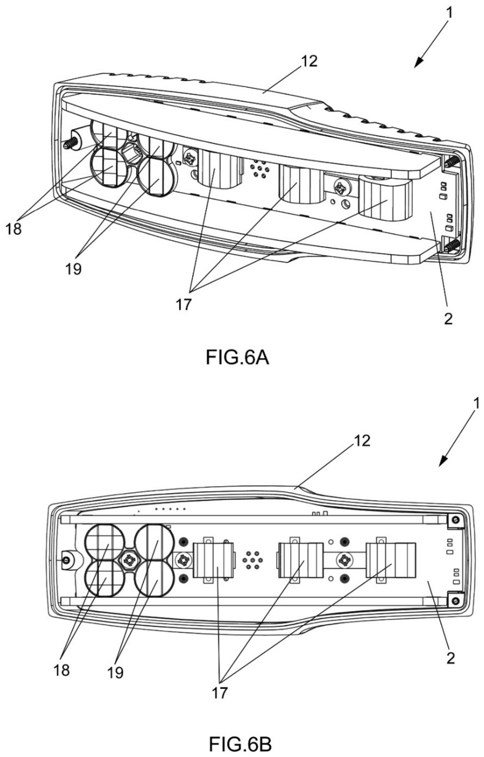

Figures 5 and 6 show the internal components of the emergency directional spotlight according to an embodiment of the present invention. Specifically, a horizontal "two-row" configuration is shown. The two flat refractors 5 and 5' which form, together with the sets of LED lights 6 and 6', the light guide can be seen in Figure 5. The horizontal semicylindrical collimators 17 of three LEDs can also be seen over the upper horizontal intermediate set of LED lights 7 and lower horizontal intermediate set of LED lights 9. The spotlight 1 comprises, arranged laterally with respect to the semicylindrical collimators 17, the vertical cylindrical collimators 18 and 19 of 2 LEDs each. The flat vertical collimators 18 and 19 are located over the two vertical intermediate sets of LED lights 10 and 11, respectively, to collimate and narrow the light beams coming from the two vertical intermediate sets of LED lights 10 and 11. Light interference with the sets of LED lights 6, 7, 8, 9, and 10 surrounding the two vertical intermediate sets of LED lights 10 and 11 is thus prevented. This can be utilised to generate a "stop light", i.e., a strong focused red light emitted from any of the vertical intermediate sets of LED lights 10 and 11. Alternatively, this "stop light" can also be generated by means of the light guide (5, 5', 6, 6'), achieving a uniform light effect.

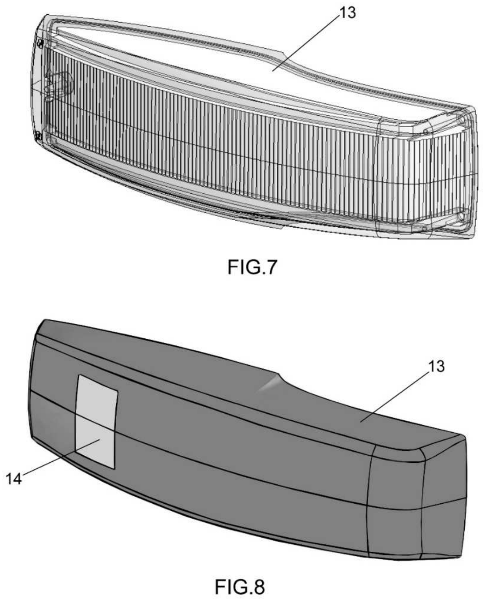

Figures 7 and 8 show two embodiments of the front lens of the emergency directional spotlight of the present invention. Figure 7 shows a transparent front lens 13 comprising internally a ribbing known as a Fresnel lens to collimate light and emit a concentrated light beam of maximum intensity. Figure 8 shows a front lens 13 which can be of any solid colour and comprises window 14. This window 14 is provided to allow the light coming from the second vertical intermediate set of LED lights 11 together with the vertical cylindrical collimator 19 to be of a different colour and/or intensity with respect to the rest of the LED lights contained in the spotlight 1. For example, the window 14 allows generating a "stop light" described in the preceding paragraph.

## Claims

1. **An emergency** directional spotlight (1), **characterised in that** it comprises:
• a base plate (2);
• a microcontroller (3) on the base plate, where the microcontroller is configured to emit control signals;
• a light guide (5, 5', 6, 6'), which comprises:
o two sets of LED lights (6, 6'), each of which is supported on the base plate and arranged horizontally;
o two flat refractors (5, 5'), each of which is located over a set of LED lights;
• at least one horizontal intermediate set of LED lights (7, 8, 9) located on the base plate and between the two sets of LED lights (6, 6') of the light guide;
• at least one vertical intermediate set of LED lights (10, 11) located on the base plate and between the two sets of LED lights (6, 6') of the light guide and laterally with respect to the horizontal intermediate set of LED lights (7, 8, 9);
• at least one intermediate set of semicylindrical collimators (17), where each semicylindrical collimator (17) is located over a LED of the horizontal intermediate set of LED lights (7, 8, 9);
• at least one intermediate set of cylindrical collimators (18, 19), where each cylindrical collimator is located over a LED of the vertical intermediate set of LED lights (10, 11);
• a driver (4) connected with the microcontroller (3), and also connected with at least the sets of LED lights (6, 6') of the light guide, the horizontal intermediate set of LED lights (7, 8, 9), and the vertical intermediate set of LED lights (10, 11); where the driver (4) is configured to activate/deactivate each LED according to control signals received from the microcontroller (3);
where at least the sets of LED lights (6, 6') of the light guide, the horizontal intermediate set of LED lights (7, 8, 9), and the vertical intermediate set of LED lights (10, 11) are configured to generate predetermined light patterns.

2. The emergency directional spotlight according to claim 1, **characterised in that** it further comprises a second horizontal intermediate set of LED lights (7, 8, 9) located on the base plate and between the two sets of LED lights (6, 6') of the light guide.

3. The emergency directional spotlight according to claim 1 or 2, **characterised in that** it further comprises a second vertical intermediate set of LED lights (10, 11).

4. The emergency directional spotlight according to claim 1, **characterised in that** it comprises a rear casing (12) configured to support the base plate (2).

5. The emergency directional spotlight according to claim 1, **characterised in that** it comprises a front lens (13) selected from a transparent lens and a translucent lens.

6. The emergency directional spotlight according to claim 5, **characterised in that** the front lens (13) comprises a window (14) aligned with a vertical intermediate set of LED lights (11).

7. The emergency directional spotlight according to claim 1, **characterised in that** it further comprises a voltage converter (15) connected with the microcontroller (3) and connectable with a powered external controller by means of electric/data cables (16, 16').

8. The emergency directional spotlight according to claim 1 or 2 or 3, where the sets of LED lights (6, 6') of the light guide, the horizontal intermediate sets of LED lights (7, 8, 9) and the vertical intermediate sets of LED lights (10, 11) are configured to emit blue, red, and amber lights.

9. The emergency directional spotlight according to claim 1, **characterised in that** a vertical intermediate set of LED lights (11) is configured to emit a high-intensity red light.

10. The emergency directional spotlight according to claim 1, **characterised in that** the two sets of LED lights (6, 6') of the light guide are configured to emit a red light with uniform intensity.

11. The emergency directional spotlight according to claim 1, **characterised in that** the two sets of LED lights (6, 6') of the light guide are configured to emit a light with uniform intensity.
